# EUROPEAN PATENT APPLICATION

(11) **EP 4 400 932 A1**
(43) Date of publication of application: **17.07.2024**
(21) Application number: 23151509.9
(22) Date of filing: 13.01.2023
(51) Int. Cl.: G05D 1/08, B64C 11/46, B64D 31/06

(54) **METHOD OF OPERATING AN AERIAL VEHICLE AND CONTROLLER**

(71) Applicant: Lilium eAircraft GmbH, 82234 Wessling (DE)
(72) Inventor: Machanek, Valentin, 82234 Wessling (DE); Dodenhöft, Jens, 82234 Wessling (DE)
(74) Representative: Grünecker Patent- und Rechtsanwälte PartG mbB

(57) **Abstract**

A method of operating an aerial vehicle (1), the aerial vehicle (1) comprising a plurality of propulsion units (4, 5) arranged to be pivotable about at least one axis along an angular position and configured to generate a thrust force and/or a lift force, wherein the angular position and/or the thrust force of the plurality of propulsion units (4, 5) are controlled based on a translational movement related command, in particular, a force command, of the aerial vehicle (1) regarding at least one degree of freedom and a rotational movement related command, in particular, a moment command of the aerial vehicle (1) regarding at least one degree of freedom. In order to ensure flight safety, if it is determined that a combination of the translational movement related command and the rotational movement related command causes a saturation in the angular position and/or the thrust force of at least one of the plurality of propulsion units (4, 5), the translational movement related command is adjusted in at least one degree of freedom such that the rotational movement related command is met.

## Description

The present invention relates to a method of operating an aerial vehicle and a controller.

From DE102015207445 A1, an aerial vehicle having a plurality of propulsion units is known. Some of the propulsion units are attached to be pivotable with respect to an airfoil. In such an aerial vehicle, the position and attitude of the aerial vehicle may be controlled by the propulsion units. In particular, the angular position with respect to the airfoil and the thrust force of each propulsion unit may be set in view of a required translational movement and rotational movement of the aerial vehicle. In addition, also aerodynamic forces such as lift and drag may be adjusted in order to adapt to the required translational movement and rotational movement.

Such an aerial vehicle is required to fly safely under all flight conditions to be expected. It has thus been devised to design the propulsion units as well as the actuators controlling the angular position of the propulsion units appropriately. However, this in turn can make the aerial vehicle heavy.

It is therefore an object of the present invention to ensure flight safety while maintaining a compact and light configuration.

Said object is achieved by a method of operating an aerial vehicle according to claim 1.

According to a first aspect, a method of operating an aerial vehicle is provided, the aerial vehicle comprising a plurality of propulsion units which are pivotable about at least one axis along an angular position, and are configured to generate a thrust force and/or a lift force. The angular position and/or the thrust force of the plurality of propulsion units are controlled based on a translational movement related command, in particular, a force command, of the aerial vehicle regarding at least one degree of freedom and a rotational movement related command, in particular, a moment command, of the aerial vehicle regarding at least one degree of freedom.

The present invention is, in particular, characterized by that, if it is determined that a combination of the translational movement related command and the rotational movement related command causes a saturation in the angular position and/or the thrust force of at least one of the plurality of propulsion units, the translational movement related command is adjusted in at least one degree of freedom such that the rotational movement related command is met.

According to the first aspect, the propulsion unit(s) as well as the actuator(s) setting an angular position of the propulsion unit(s) need not be designed such that they can deal with all possible translational movement related commands and rotational movement related commands, examples of which are force commands and moment commands. Rather, in the control according to the invention, a prioritization of the rotational movement related command is applied if a respective limit value of at least one of the angular position and the thrust force were caused to be exceeded upon a combination of certain force and moment commands, which is also referred to as saturation. In other words, the saturation takes place theoretically. That is, if a certain combination of commands is determined to cause saturation, it is determined (for example, by calculation) that the command combination would let the angular position and/or the thrust force take an inappropriate value, for example, a value beyond a respective limit value. However, according to the present invention, it is actually prevented that the thrust force and/or the angular position indeed take inappropriate values since the saturation is resolved by adapting the translational movement related command in at least one degree of freedom. It is to be noted that the respective limit values need not be hard limits (safety critical limits) imposed by mechanics, aerodynamics, and/or thermic characteristics, but can be soft limits, for example, to keep a safety margin from the hard limits.

For example, a combination of large force and moment commands could result from the aircraft being simultaneously exposed to pilot inputs and/or atmospheric disturbances and/or changes of the center of gravity and/or actuator failures.

By means of the present invention, the aerial vehicle can still carry out a desired rotational movement or can be orientated in a desired attitude which is controlled by the underlying rotational movement related command, while temporarily the translational movement may deviate from a desired translational movement in view of the adjustment of the translational movement related command. Hence, in particular, in extreme flight situations, in which force commands and moment commands may accumulate in at least one of the angular position and the thrust force, that is, would cause at least one of the angular position and the thrust force to exceed its respective limit value, an appropriate rotational movement and thus stability of the aerial vehicle can be ensured. In particular, the thrust force and/or the angular position of the at least one propulsion unit can actually take values complying with the rotational movement related command, preferably in all degrees of freedom, and the adjusted translational movement related command.

It is preferable that in controlling the rotational movement of the aerial vehicle no other control effectors beyond the plurality of propulsion units, in particular, no other primary flight control surfaces such as rudder, aileron, and elevator participate.

In particular, the aerial vehicle may not have such control effectors.

Then, at least the rotational movement but also the translational movement of the aerial vehicle can be controlled only by the plurality of propulsion units. In particular, in such a configuration, accumulation in at least one of the angular position and the thrust force of a propulsion unit can easily occur due to the translational movement related command and the rotational movement related command affecting the angular position and/or the thrust force of the same propulsion unit(s).

According to still another aspect, at least one of the propulsion units may function as a primary flight control surface such as a flap. In particular, at least part of the propulsion units may comprise a lift generating body such as a flap. For example, a propulsion unit comprises a flap unit and an engine, preferably a ducted fan.

Thus, translational and rotational movement of the aircraft can be controlled by the propulsion units using a combination of aerodynamic forces and thrust forces (and aerodynamic moments and thrust moments).

Alternatively or additionally, at least one, preferably all of the propulsion units is/are pivotable about a transversal axis of the aerial vehicle extending along a wing span of the aerial vehicle.

Thereby, force commands and moment commands regarding different degrees of freedom may affect the angular position and/or the thrust force. The aerial vehicle may be of a vertical-take-off-and-landing type. In particular, the propulsion unit may be pivoted between a substantially vertical and a substantially horizontal angular position. Thus, on the trajectory of the propulsion unit the angular position and/or the thrust force may be affected by force and moment commands regarding multiple degrees of freedom. In addition, forces may be controllable in a plane including the vertical and the longitudinal axis of the aerial vehicle, while the aerial vehicle may substantially avoid generating forces along the transversal axis by the propulsion units.

According to another aspect, at least one propulsion unit may be provided on each side of a longitudinal axis of the aerial vehicle, preferably at least two propulsion units are aligned along a transversal axis of the aerial vehicle and/or at least three propulsion units are arranged on the corners of a virtual triangle, respectively, preferably at least four propulsion units are arranged on the corners of a virtual quadrangle, in particular, a rectangle.

According to this aspect, the rotational movement of the aerial vehicle with respect to at least one degree of freedom can be reliably controlled. If three propulsion units are arranged on the corners of a triangle, full rotational movement control may be enabled. In particular, with the angular position and the thrust force of each propulsion unit being control inputs, control about all three principal rotational axes is reliably enabled. At least four propulsion units on the corners of a quadrangle may enhance stability and further improve control efficiency.

Preferably, an adjustment, more preferably an adjustment amount, in a degree of freedom of the translational movement related command depends on the flight state and/or depends on the angular position or the thrust force being caused to be saturated, and/or depends on a correlation quantity between the translational movement related command along the longitudinal and/or vertical axis of the aerial vehicle and the angular position, and/or depends on a correlation quantity between the translational movement related command along the longitudinal and/or vertical axis of the aerial vehicle and the thrust force.

Thus, a degree of freedom of the translational movement related command to be adjusted can be appropriately selected depending on the current flight state and/or the angular position or the thrust force which is about to exceed the respective limit value. Thus, an appropriate deviation from a desired translational movement of the aerial vehicle can be achieved while ensuring that the rotational movement related command is achieved. Further, by determining any of the above correlation quantities, control can be carried out more appropriately. It is to be noted that the correlation quantity may be a sensitivity or derivative of the translational movement related command along the longitudinal axis and/or the vertical axis in view of the thrust force or the angular position, or may be an inversion of the sensitivity or derivative, i.e. a relation between the angular position or thrust force and the translational movement related command along the longitudinal axis and/or the vertical axis, or the change in the angular position or thrust force required to yield/generate a certain change in the translational movement related command along the longitudinal axis and/or the vertical axis.

It is to be noted that the adjustment amount may be an absolute quantity and/or a factor applied to the respective translational movement related command.

Alternatively or additionally, an adjustment, more preferably an adjustment amount, in a degree of freedom of the translational movement related command may depend on a ratio of the translational movement related command along a longitudinal axis of the aerial vehicle to the translational movement related command along a vertical axis of the aerial vehicle, wherein said ratio is preferably variable, more preferably said ratio varies with a pilot input, and/or may depend on at least one predetermined threshold value of the translational movement related command along the longitudinal and/or vertical axis of the aerial vehicle, wherein said threshold value is preferably variable, more preferably said threshold value varies with a pilot input.

Thereby, a preference in the adjustment can be appropriately reflected. In particular, the adjustment amount in the degree of freedom along the longitudinal axis and along the vertical axis can be correlated with the ratio of the translational movement related command along the longitudinal axis to the translational movement related command along a vertical axis such that the higher the ratio is, the higher the adjustment along the longitudinal axis with respect to the adjustment along the vertical axis is, and vice versa. A threshold value for at least one of the translational movement related commands can enhance flight safety, as critical deviations in the translational movement can be avoided.

It is to be noted that the pilot input can be provided by any input means on the aerial vehicle such as a joy stick, a display, an audio signal receiving device, etc.

Preferably, the higher an absolute value of a correlation quantity between the translational movement related command along the longitudinal axis and/or the vertical axis of the aerial vehicle and the angular position is, the higher the adjustment amount of the translational movement related command along the longitudinal axis and/or the vertical axis of the aerial vehicle is, respectively, if it is determined that the angular position is saturated, and/or the higher an absolute value of a correlation quantity between the translational movement related command along the longitudinal axis and/or the vertical axis of the aerial vehicle and the thrust force is, the higher the adjustment amount of the translational movement related command along the longitudinal axis and/or the vertical axis of the aerial vehicle is, respectively, if it is determined that the thrust force is saturated. Particularly, a first correlation quantity may be a correlation quantity between the translational movement related command along the longitudinal axis of the aerial vehicle and one of the angular position and the thrust force, and a second correlation quantity may be a correlation quantity between the translational movement related command along the vertical axis of the aerial vehicle and the one of the angular position and the thrust force. In a first flight state, in particular hover flight, in which an absolute value of the first correlation quantity is smaller than in a second flight state, in particular forward flight, an adjustment amount of the translational movement related command along the longitudinal axis of the aerial vehicle may be smaller than in the second flight state, if it is determined that the one of the angular position and the thrust force is saturated, and, preferably, in the first flight state, an absolute value of the second correlation quantity is higher than in the second flight state, and an adjustment amount of the translational movement related command along the vertical axis of the aerial vehicle may be higher than in the second flight state, if it is determined that the one of the angular position and the thrust force is saturated.

Accordingly, the saturation of the thrust force and/or the angular position can be resolved appropriately based on the correlations prevailing in the first and second flight states. It is to be noted that for correlation quantities related to the other one of the angular position and the thrust force the above relationships may be reversed, which are denoted as third and fourth correlation quantities below.

According to still another aspect, a first correlation quantity may be a correlation quantity between the translational movement related command along the longitudinal axis of the aerial vehicle and one of the angular position and the thrust force, and a second correlation quantity may be a correlation quantity of the translational movement related command along the vertical axis of the aerial vehicle and the one of the angular position and the thrust force. In a first flight state, in particular hover flight, an absolute value of the first correlation quantity may be smaller than an absolute value of the second correlation quantity, and an adjustment amount of the translational movement related command along the vertical axis of the aerial vehicle may be higher than along the longitudinal axis of the aerial vehicle, preferably only the translational movement related command along the vertical axis is adjusted, if it is determined that the one of the angular position and the thrust force is saturated.

Thus, an adjustment of the translational movement related command can be made in the degree of freedom of the translational movement related command being strongly coupled to the one of the angular position and the thrust force. Consequently, appropriate adjustment can be made and saturation can be prevented.

Preferably, in a second flight state, in particular forward flight, an absolute value of the second correlation quantity is smaller than an absolute value of the first correlation quantity, and an adjustment amount of the translational movement related command along the longitudinal axis of the aerial vehicle is higher than an adjustment amount along the vertical axis of the aerial vehicle, preferably only the translational movement related command along the longitudinal axis is adjusted, if it is determined that the one of the angular position and the thrust force is saturated.

Thus, even in a case where the relation of the values of the correlations is reversed, appropriate adjustment can be made.

It is to be noted that a third correlation quantity may be a correlation quantity of the translational movement related command along the longitudinal axis and the other of the angular position and the thrust force, and a fourth correlation quantity may be a correlation quantity of the translational movement related command along the vertical axis and the other of the angular position and the thrust force, and in the same first flight state, an absolute value of the fourth correlation quantity may be smaller than an absolute value of the third correlation quantity, and an adjustment amount of the translational movement related command in the longitudinal axis may be higher than in the vertical axis, preferably only the translational movement related command along the longitudinal axis is adjusted, if it is determined that the other of the angular position and the thrust force is saturated.

It is to be noted that, in the second flight state, an absolute value of the aforementioned third correlation quantity may be smaller than an absolute value of the fourth correlation quantity, and an adjustment amount of the translational movement related command in the vertical axis may be higher than in the longitudinal axis, preferably only the translational movement related command along the vertical axis is adjusted, if it is determined that the other one of the angular position and the thrust force is saturated.

The term "smaller" in this regard particularly means at maximum a half, preferably, at maximum a quarter, more preferably, at maximum a sixth. In a similar way, "higher" means at least the double, preferably, at least four times, more preferably, six times. Preferably, for each of the angular positon and the thrust force, the correlation quantity with respect to the longitudinal axis is at its minimum and/or the correlation quantity with respect to the vertical axis is at its maximum in the first flight state, and vice versa in the second flight state.

It is to be noted that the first correlation quantity may be a correlation quantity between the translational movement related command along the longitudinal axis of the aerial vehicle and the thrust force, the second correlation quantity may be a correlation quantity between the translational movement related command along the vertical axis of the aerial vehicle and the thrust force, the third correlation quantity may be a correlation quantity between the translational movement related command along the longitudinal axis of the aerial vehicle and the angular position, and the fourth correlation quantity may be a correlation quantity between the translational movement related command along the vertical axis of the aerial vehicle and the angular position.

The first flight state can be a substantially vertically orientated flight state, in which at least the propulsion unit whose saturation is determined, preferably all of the propulsion units (the thrust force axis thereof) are orientated vertically in a body frame. Examples therefor are hover flight, vertical ascent or descent. On the other hand, the second flight state can be a substantially horizontally orientated flight state, in which at least the propulsion unit whose saturation is determined, preferably all of the propulsion units (the thrust force axis thereof) are orientated horizontally in a body frame. Examples therefor are forward flight or cruise flight.

Still further preferably, in a third flight state between the first and second flight states, an adjustment in the translational movement related commands along the longitudinal axis and the vertical axis of the aerial vehicle is made based on a ratio of the first correlation quantity and the second correlation quantity and/or a ratio of the translational movement related command along the longitudinal axis of the aerial vehicle to the translational movement related command along the vertical axis of the aerial vehicle, wherein said ratio is preferably variable, more preferably said ratio varies with a pilot input, and/or based on at least one predetermined threshold value of the translational movement related command along the longitudinal and/or vertical axis of the aerial vehicle wherein said threshold value is preferably variable, more preferably said threshold value varies with a pilot input.

According thereto, in the third flight state, adjustment can be made appropriately wherein both the translational movement related command along the longitudinal axis and the translational movement related command along the vertical axis can be adjusted. In particular, an adjustment amount in the higher one of these commands can be higher than an adjustment amount in the lower one of these commands. By considering the aforementioned correlation quantities, also in the third flight state, appropriate adjustments can be performed. In particular, adjustments can be made such that the higher the first correlation quantity is relative to the second correlation quantity, the higher an adjustment amount in the longitudinal axis is relative to the adjustment amount in the vertical axis, and vice versa, if the corresponding one of the thrust force and the angular position is determined to be saturated. The predetermined threshold value of the translational movement related command may be determined in view of safety requirements or an impact of the translational movement related commands in the different degrees of freedom on the flight state. It is to be noted that the pilot input can be provided as mentioned above.

According to still another aspect, in at least one predetermined flight state, in particular, in the first flight state, a translational movement related command along the vertical axis and/or a rotational movement related command about the longitudinal axis and/or the transversal axis may cause saturation in the thrust force of at least one propulsion unit, and the translational movement related command along the vertical axis may be adjusted.

Thus, the translational movement related command along the vertical axis, a rotational movement related command about the longitudinal axis and the transversal axis form a first command group where any of these commands may cause a change in the required thrust force resulting in saturation at least for certain command values. In particular, various value combinations of these commands can cause saturation in the thrust force. However, by means of this aspect, the rotational movement related commands of this group can be complied with while deliberately accepting deviations in the translational movement along the vertical axis.

For example, in the first flight state, which may be hover flight, upon failure of a propulsion unit the thrust force is caused to be saturated, and the translational movement related command along the vertical axis may be adjusted.

Thus, even in case of failure of a propulsion unit, the proper rotational movement of the aerial vehicle can be ensured.

According to still another aspect, in at least one predetermined flight state, in particular, in the first flight state, a translational movement related command along the longitudinal axis and/or a rotational movement related command about the vertical axis may cause saturation in the angular position of at least one propulsion unit, and the translational movement related command along the longitudinal axis may be adjusted.

Thus, the translational movement related command along the longitudinal axis and the rotational movement related command about the vertical axis form a second command group where any of these commands may cause a change in the required angular position resulting in saturation at least for certain command values. In particular, various value combinations of these commands can cause saturation in the angular position. However, by means of this aspect the rotational movement related command of this group can be complied with while deliberately accepting deviations in the translational movement along the longitudinal axis.

It is to be noted that in this predetermined flight state, the first group of commands may be approximately independent of the angular position, and the second group of commands may be approximately independent of the thrust force. Thus, it is particularly preferable if only the translational movement related command of the first command group is used (adjusted) to resolve saturation in the thrust force in the predetermined flight state, and if only the translational movement related command of the second command group is used (adjusted) to resolve saturation in the angular position in the predetermined flight state. The predetermined (first) flight state may be hover flight, for example, in this case.

For example, in the first flight state, which may be backward hover flight, upon change in a rotational movement related command about the vertical axis, the respective limit value of the angular position is caused to be saturated, and the translational movement related command along the longitudinal axis is adjusted.

Thus, the heading of the aerial vehicle can be changed as requested while the translational movement along the longitudinal axis may be adjusted.

According to still another aspect, in at least one predetermined flight state, in particular, in the second flight state, a translational movement related command along the vertical axis and/or a rotational movement related command about the longitudinal axis and/or the transversal axis may cause saturation in the angular position of at least one propulsion unit, and the translational movement related command along the vertical axis may be adjusted.

Thus, in the second flight state, if it is determined that the angular position of the propulsion unit is caused to be saturated, the translational movement related command regarding the vertical axis may be adjusted. Thus, the rotational movement related commands of the first command group can be met, while the translational movement along the vertical axis may be different from the desired translational movement.

According to still another aspect, in at least one predetermined flight state, in particular, in the second flight state, a translational movement related command along the longitudinal axis and/or a rotational movement related command about the vertical axis may cause saturation in the thrust force of at least one propulsion unit, and the translational movement related command along the longitudinal axis may be adjusted.

Thus, the rotational movement related command of the second command group about the vertical axis can be met, while the translational movement along the longitudinal axis may be different from the desired translational movement. In this case, the second (predetermined) flight state may be forward flight.

In other words, in the first flight state, the first command group can be associated with the thrust force, and, thus, preventing saturation of it, and the second command group can be associated with the angular position, and, thus, preventing saturation of it. In the second flight state, the association may be reversed. Consequently, it is preferable if only the translational movement related command of the first command group is referred to for resolving saturation in the angular position in the second flight state, and if only the translational movement related command of the second command group is referred to for determining saturation in the thrust force in the second flight state.

For example, in forward flight, in case of a relatively large value of the translational movement related command regarding the longitudinal axis, the respective limit value of the thrust force is an upper limit value, and thrust force saturations are resolved by reducing the translational movement related command regarding the longitudinal axis, and, in case of a relatively small value command of the translational movement related command regarding the longitudinal axis, the respective limit value of the thrust force is a lower limit value, and the translational movement related command regarding the longitudinal axis is increased.

Thus, saturation of the thrust force can be reliably prevented by appropriately adapting the translational movement related command along the longitudinal axis.

According to still another aspect, in at least one predetermined flight state, in particular, in the third flight state, a translational movement related command along the longitudinal axis and/or vertical axis and/or a rotational movement related command about the longitudinal axis and/or the transversal axis and/or the vertical axis may cause saturation in the thrust force and/or angular position of at least one propulsion unit, and the translational movement related command along the longitudinal axis and/or the vertical axis may be adjusted.

Thus, any combination of commands out of the first and second command groups can cause saturation in any of the thrust force and the angular position, which can be prevented by adjusting one or both of the translational movement related commands along the longitudinal axis and the vertical axis. In other words, thrust force and angular position are affected by a change in any of the commands of the first and second command group.

According to still another aspect, saturation of the angular position and/or the thrust force may be determined with respect to a respective limit value, and the respective limit value may be variable, preferably, the respective limit value depends on at least one parameter of the aerial vehicle and/or the environmental conditions, even more preferably, on a parameter related to at least one of aerodynamic, thermic, and mechanic characteristics.

Thus, control can be performed more properly as the limit value is not static. In particular, it is possible to remedy saturation in each flight state properly since saturation is determined reliably, while still ensuring good flight performance since the limit value is suitable for the flight state. The parameters may be detected with a detection device such as a sensor.

Another aspect of the present invention provides a controller configured to perform a control according to any of the aforementioned aspects, when provided to an aerial vehicle.

Thus, the aforementioned effects can be achieved in the aerial vehicle equipped with the controller.

The aforementioned aspects will now be described in detail by making reference to the accompanying drawings.
Fig. 1 shows a perspective view of an aerial vehicle to which the method according to the present invention can be applied.
Fig. 2 is a flow chart representing an embodiment of the method according to the present invention
Fig. 3A is a diagram illustrating an example of saturation in thrust force without adjustment in hover flight, Fig. 3B is a diagram illustrating an example of remedying the saturation in the thrust force by adjustment.
Fig. 4A is a diagram illustrating an example of saturation in angular position without adjustment in hover flight, Fig. 4B is a diagram illustrating an example of remedying the saturation in the angular position by adjustment.
Fig. 5A is a diagram illustrating an example of saturation in thrust force without adjustment in cruise flight, Fig. 5B is a diagram illustrating an example of remedying the saturation in thrust force by adjustment.
Fig. 6 shows the influence of the force and moment commands on the control inputs depending on the flight state.

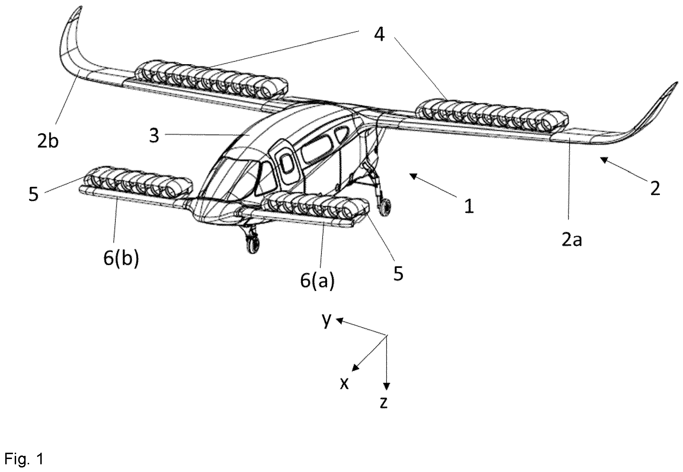

Fig. 1 shows an aerial vehicle which is designated by reference numeral 1. The aerial vehicle 1 comprises an airfoil 2. In particular, the aerial vehicle 1 comprises a left airfoil 2a and a right airfoil 2b extending on both sides of the longitudinal axis of a fuselage 3, respectively along a transversal axis of the aerial vehicle. The transversal axis extends along a wing span of the airfoils 2a and 2b.

On both of the left and right airfoils 2a and 2b, a plurality of propulsion units 4 are attached. The propulsion units 4 are attached to a rear portion, in particular a rear end portion, of the airfoil 2. The plurality of propulsion units 4 are aligned along the transversal axis of the aerial vehicle 1. The propulsion units 4 are attached to be pivotable about the transversal axis. In particular, the propulsion units 4 are pivotable between a substantially horizontal angular position (cruise state) and a substantially vertical angular position (hover state). On the airfoils 2a and 2b, nine propulsion units 4 are provided, respectively.

An actuator is provided for each propulsion unit 4 to set the angular position of the propulsion unit 4 with respect to the airfoil 2.

In addition, the aerial vehicle 1 comprises a canard 6. In particular, a left canard 6a and a right canard 6b are provided to both sides of the longitudinal axis in front of the airfoils 2a and 2b. Front propulsion units 5 are attached to a rear portion, in particular to a rear end portion of the canards 6. The front propulsion units 5 are also attached to the canard 6 to be pivotable around an axis parallel to the transversal axis. On the canards 6a and 6b, six propulsion units 5 are provided, respectively.

It is preferable that both of propulsion units 4 and front propulsion units 5 are of a ducted fan type. Also, they may be electrically driven by a rotary electric machine such as an electric motor.

The propulsion units 4 and the front propulsion units 5 comprise a flight control surface, in this case a flap, in order to generate additional lift force. In other words, the outer case of the propulsion units 4 comprises a lift generating body. It is to be mentioned that the propulsion units also generate a drag force.

Each of the propulsion units 4 and the front propulsion units 5 can generate a thrust force by rotation of the fan driven by the electric motor. It is to be noted that each propulsion unit 4 and each front propulsion unit 5 may have a plurality of ducted fans.

The aerial vehicle 1 further comprises at least one detection device such as a sensor. The detection device can detect directly or indirectly a parameter related to aerodynamics such as air density, pressure, air flow rate, state of a boundary layer of the airfoils 2a and 2b and/or the propulsion units 4 and/or front propulsion units 5, related to thermic characteristics such as temperature and heat, or related to mechanics such as a stress or strain, for example, in any of the propulsion units 4 or the front propulsion units 5.

The aerial vehicle 1 is controlled, for example, in terms of its position and its attitude. The aerial vehicle 1 has three principal axes: x being the longitudinal axis, y being the transversal axis, and z being the vertical axis in a body fixed coordinate system (body frame) of the aerial vehicle 1, as seen in Fig. 1. The three axes constitute an orthogonal right hand system. The origin of the coordinate system may be located in the centre of gravity.

The translational degrees of freedom of the position of the aerial vehicle are controlled based on force commands for the x and z axes of the prescribed body frame. In order to comply with a force command along the y axis, the aerial vehicle 1 needs to be rotated first along the x axis, at least for the configuration of the aerial vehicle as presented above. That is, the aerial vehicle 1 is not configured to generate a force along the y axis (lateral force) in the body frame. The three rotational degrees of freedom of the attitude of the aerial vehicle 1 are controlled based on moment commands regarding the x, y, z axes. A moment command about the x axis is also referred to as roll moment command, a moment command about the y axis is also referred to as pitch moment command, and a moment command about the z axis is also referred to as yaw moment command. Above, the control has been described with respect to a prescribed body frame. However, commands can be generated in a NED frame (north-east-down) or in another earth related frame, and then be transferred into the body frame, for example. For example, if the x and z axes of the body frame are aligned with the x and z axes of the NED frame, and a command along the y axis in the NED frame is given, a bank angle has to be established by the aerial vehicle 1 which may result in a roll moment command in the body frame.

It is to be noted that the movement along the six degrees of freedom is controlled by controlling the angular position of the propulsion units 4 and front propulsion units 5, and the absolute value of the thrust force of the propulsion units 4 and the front propulsion units 5, which are control inputs.

It is conceivable that the number of independent control inputs and the bank angle (for the lateral force) is preferable at least equal to the six degrees of freedoms of the aerial vehicle or more, to enable full control of the attitude and position of the aerial vehicle 1.

Each of the control inputs may have at least one respective limit value due to structural limits, limits of the flight state, unintentional flow transition on the control surfaces of the propulsion units, thermal conditions, and the like. For example, the thrust force is limited up and below by the maximum and minimum rotational speed of the fan as well as the air density. The angular position may be limited by a mechanical stop or abutment in both directions of the angular trajectory. The respective limit values may be set as soft limit values with a safety margin with respect to these limits.

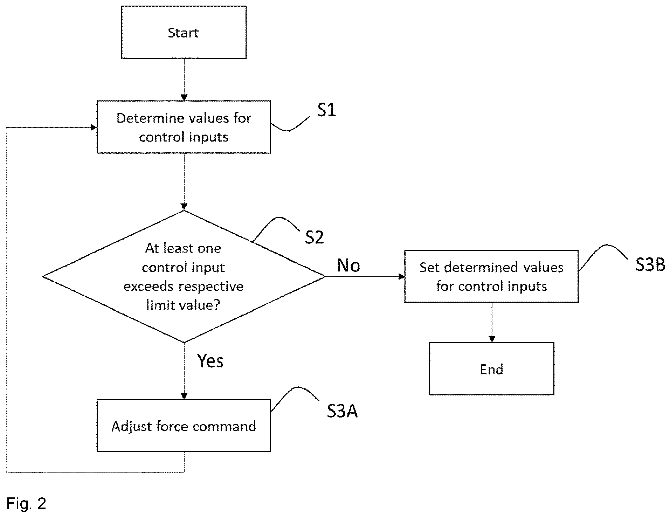

The aerial vehicle comprises a controller. The controller can comprise a permanent and/or volatile memory on which, for example, functional definitions of the control inputs are stored in dependence of the force and moment commands regarding all degrees of freedoms. The independent control inputs may be in form of a vector which is a function of a vector comprising the respective force and moment commands regarding the different degrees of freedom. It is also possible that a table is stored which assigns values of the force and moment commands to respective values of the control inputs. Furthermore, the respective limit values for the control inputs can be stored in the controller, preferably, as varying quantities. Values not specified in the table may be determined by means of inter- or extrapolation or regression. Further, an analytic or numeric solver can be used in order to determine values for the control inputs allowing the force and moment commands to be fulfilled (S1 in Fig. 2). In other words, a solution for the plurality of functions is determined.

Then, the values of the control inputs are compared to the respective limit values stored in advance on the memory of the controller (S2).

If it is determined that a value of a control input would exceed a respective limit value, or fall below it (S2: Yes) (saturation), a force command is adjusted (S3A). It is to be noted that at this time, a force command can be iteratively added by an increment until an appropriate solution is found which is illustrated by the arrow closing the process in Fig. 2. Alternatively, the force command resulting for the respective control input being at its limit value may be determined directly. Even in the latter case, the control inputs may be determined once again with the adjusted force command, as some of the other control inputs being control inputs previously not determined to be saturated may be required to change.

If it is determined that none of the determined values of the respective control inputs exceeds the respective limit value (S2: No), the controller controls the actuator and the electric motor so as to set the determined values for angular position and thrust force (S3B).

In the following, an example of the method of Fig. 2 applied to a hover flight of the aerial vehicle 1 is described. It is to be noted that the aforementioned routine may have an additional step of determining the current flight state.

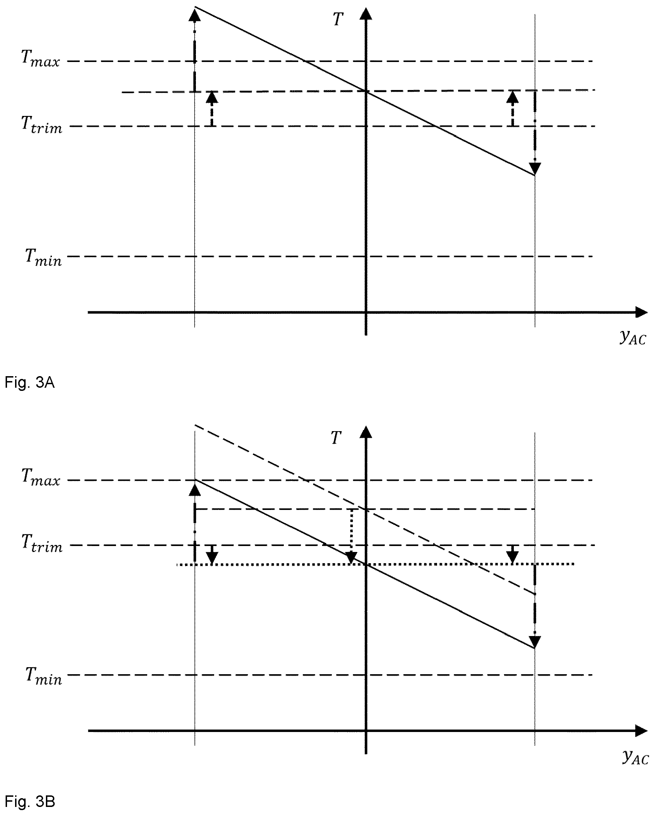

In the following Figs. 3A to 5B, in the figures which do not show the adjustment principle in case of saturation (respective Figs. A), a portion of the control input relative to the trim condition resulting from the respective force command is shown in dashed arrows, and a portion resulting from the respective moment command is shown in chain-dot arrows from the dashed reference line (unadjusted reference line) obtained by adding the aforementioned portion resulting from the respective force command to the trim state. The overall distribution resulting from the respective force and moment commands is shown as a thick line in the figures without adjustment.

In the figures considering the adjustment (respective Figs. B), the unadjusted reference line as well as the overall distribution without adjustment are shown as dashed lines. An adjustment portion of the control input resulting from adjustment of the respective force command is shown as dotted arrow which results in an adjusted reference line which is shown as dotted line. A finally adjusted portion of the respective control input relative to the trim condition is shown as thick arrow.

Fig. 3A shows saturation in the thrust force during hover flight. Figs. 3A and 3B show the distribution of the thrust force T along the y axis (y_{AC}).

Hover flight is characterized by at least one propulsion unit, preferably all the propulsion units 4 and front propulsion units 5 substantially pointing upward (that is, the thrust force vector pointing upward) along the z axis of the aerial vehicle. Alternatively, the hover flight can be characterized such that a component of the thrust force provided by the at least one propulsion unit, preferably of the entire thrust force of the propulsion units 4 and the front propulsion units 5, pointing along the z axis is higher than a component along the x axis, is preferably at least the double. In particular, in hover flight the thrust component along the x axis may vanish while a force along the z axis may mainly or entirely be provided by the thrust force but not by aerodynamic forces. In the present case, saturation of said at least one propulsion unit pointing upward in view of the thrust force is determined. In hover flight, the angular position of the propulsion unit whose thrust force is determined to be saturated, preferably of all the propulsion units, may be substantially 90 degrees which corresponds to an orientation in which a thrust axis points along the z axis. The components in the directions can be determined based on sensors detecting the angular positions and rotational speeds of the propulsion units 4 and front propulsion units 5 or may be determined based on the current values regarding angular position and thrust force stored in the memory.

In Fig. 3A, a case is shown, where starting from a steady hover flight, being a trimmed flight state in which a propulsion unit 4 or front propulsion unit 5 has a thrust force Ttrim, a force command along the z axis as well as a roll moment command are instructed by the controller, in particular, a change in any of these commands.

By solving the equation system of the control inputs, wherein each control input is defined as a function of the force and moment commands in the respective degrees of freedom, a result is achieved where a propulsion unit 4 and/or front propulsion unit 5 on the negative (left) side in Fig. 1 along the y axis would be caused to exceed its maximum thrust force Tmax and thus the thrust force is determined to be theoretically saturated. Once again, it is to be recalled that there is no actual saturation, that is, the thrust force does not actually take inappropriate values. It is to be noted that Figs. 3A and 3B show the case of interaction of roll moment command and force command along the z axis causing saturation. However, in addition or alternatively, a pitch moment command can provoke saturation in the thrust force, which is however not depicted as the pitch moment requires a lever along the x axis but not along the y axis.

Thus, the combination of the instructed commands cannot be reflected accordingly by the aerial vehicle.

In order to maintain stability of the aerial vehicle, the adjustment according to Fig. 3B is performed. Thereby, the force command regarding the z axis is adjusted such that the roll moment command can be fulfilled with the thrust force being the maximum thrust force Tmax. That is, the force command regarding the z axis is adjusted resulting in a vertical downward acceleration. However, it is worth mentioning that the force command regarding the z axis may be adjusted such that it results in a reduced upward acceleration in case the amount of excess with respect to the limit value is smaller. In other words, an upward acceleration need not be reversed into a downward acceleration, but can be converted into a decreased upward acceleration, dependent on the amount of excess with respect to the limit value. That is, the adjustment amount varies with and depends on the magnitude of saturation, which is the amount of excess with respect to the limit value.

It is to be noted that the above typically applies to the case of a relatively large force command regarding the z axis, that is, upward vertical acceleration. However, it is to be noted that in case of a relatively small force command, for example, for downward vertical acceleration, the thrust force may be caused to exceed its lower limit value Tmin. Then, the force command is accordingly increased.

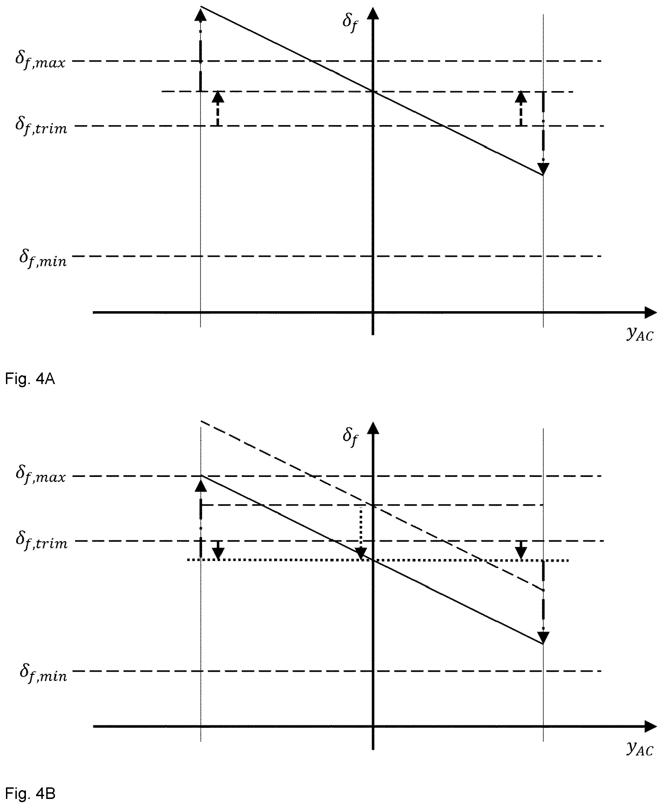

Fig. 4A shows a case of saturation in the angular position during backward hover flight. Figs. 4A and 4B show the distribution of the angular position δf along the y axis (y_{AC}).

Also, in this flight state, a thrust force component regarding the z axis is higher than a thrust force component regarding the x axis even though a thrust force component regarding the x axis can exist. In particular, the angular position may be of more than 90 degrees and less than 120 degrees. If in a steady backward hover flight with the angular position δfTrim, a force command regarding the x axis as well as a yaw moment command are instructed, in particular, a change in any of these commands is instructed, the angular position may exceed its upper limit value δfMax and thus be saturated.

Thus, according to Fig. 4B, the force command regarding the x axis (backward acceleration) is adjusted such that with the maximum angular position, the yaw moment command can be met. As a consequence, the commanded translational movement along the x axis may deviate.

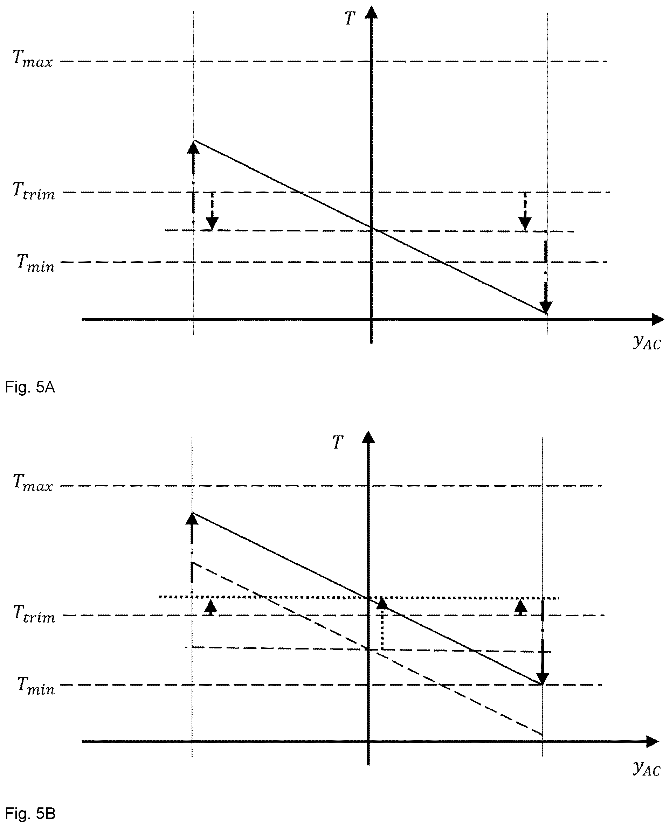

Finally, Fig. 5A shows a case of saturation in the thrust force T during a cruise/forward flight. Figs. 5A and 5B show the distribution of the thrust force T along the y axis (y_{AC}).

The cruise/forward flight is characterized by at least one propulsion unit substantially pointing along the longitudinal axis, preferably all the propulsion units 4 and front propulsion units 5 substantially pointing along the longitudinal axis. Alternatively, the cruise flight may also be defined by a component of the thrust force provided by the propulsion unit, preferably of the entire thrust force of all propulsion units, regarding the x axis being higher than a thrust component regarding the z axis, preferably, being at least the double. In particular, in forward flight, the thrust component along the z axis may vanish while a force along the x axis is mainly or entirely provided by the thrust force while a force along the z axis may mainly or entirely be provided by aerodynamic forces. In the present case, saturation of said at least one propulsion unit pointing along the longitudinal axis in view of the thrust force is determined. In forward flight, the angular position of the propulsion unit whose thrust force is determined to be saturated, preferably of all the propulsion units, may be substantially close to or equal to 0 degrees which corresponds to an orientation in which a thrust force axis points along the x axis. In Fig. 5A, a case is shown, where starting from a steady cruise flight, being a trimmed flight state in which a propulsion unit 4 and/or front propulsion unit 5 has a thrust force Ttrim, a force command along the x axis as well as a yaw moment command are instructed by the controller, in particular, a change in any of these commands. By solving the equation system of the control inputs, wherein each control input is defined as a function of the force and moment commands in the respective degrees of freedom, a result is achieved where a propulsion unit 4 and/or front propulsion unit 5 on the positive (right) side along the y axis is caused to fall below its minimum thrust force Tmin.

According to Fig. 5B, the force command regarding the x axis is adjusted such that the yaw moment command can be fulfilled by the minimum thrust force Tmin. That is, the force command regarding the x axis is increased resulting in an increase in a positive longitudinal acceleration or a smaller deceleration.

It is to be noted that Fig. 5 shows the case of a relatively small force command regarding the x axis. However, in case the thrust force would be caused to exceed its upper limit value Tmax based on a relatively large force command regarding the x axis, the force command along the x axis may accordingly be reduced resulting in a reduced forward acceleration or a deceleration dependent on the magnitude of saturation.

Even though not shown, the angular position may also be determined to be saturated during forward/cruise flight. In particular, a force command regarding the z axis, a roll moment command, and a pitch moment command may cause saturation of the angular position of a propulsion unit. In this regard, the force command regarding the z axis can be adjusted accordingly.

Operations and effects of the above control will be described in the following.

In each of the three examples given above, once a control input is determined to theoretically exceed a respective limit value due to a combination of the force and moment commands (dashed and chain-dotted arrows in the figures without adjustment), that is, to be saturated, the force commands are adjusted in at least one degree of freedom.

Thus, a predetermined moment command can be met. As a result, the aerial vehicle 1 can be maintained or brought in a predetermined attitude and flight stability can be ensured.

In controlling the rotational movement of the aerial vehicle 1, no other control effectors beyond the plurality of propulsion units 4 and front propulsion units 5, in particular, no other primary flight control surfaces such as rudder, aileron, and elevator participate. That is, the aerial vehicle 1 does not have such control effectors.

Then, at least the rotational movement but also the translational movement of the aerial vehicle can be controlled only by the plurality of propulsion units 4 and front propulsion units 5. In particular, in such a configuration, accumulation in at least one of the angular position and the thrust force of a propulsion unit due to a combination of force and moment commands can easily occur due to the translational movement related command and the rotational movement related command affecting the angular position and/or the thrust force.

In the above, the aerial vehicle 1 has the propulsion units 4 and front propulsion units 5 each of which being attached pivotally about an axis parallel to the transversal axis. If a respective limit value of at least one of these propulsion units 4 and front propulsion units 5 would be exceeded, then the above adjustment is performed. Thus, even with this configuration, where control effectors such as the propulsion units are not dedicated to controlling specific degrees of freedom but instead used for multiple purposes, flight stability can be ensured.

Further, the aerial vehicle 1 has at least one propulsion unit 4 attached on a rear portion of the aerial vehicle 1 on each side of the longitudinal axis and aligned along the transversal axis. Furthermore, the propulsion units 4 are preferably arranged symmetrically with respect to the longitudinal axis. Thus, the aerial vehicle 1 can be made robust and expressing the moment commands in terms of the control inputs can be facilitated. In addition, the aerial vehicle 1 has the front propulsion units 5 which are also provided symmetrically on both sides of the longitudinal axis. A centre of gravity of the aerial vehicle 1 in an empty state and in a loaded state preferably is located between the propulsion units 4 and the front propulsion units 5 when seen along any axis connecting any two of the propulsion units. Thus, the aerial vehicle 1 has at least three propulsion units not arranged on the same line. In other words, the attachment locations of at least three propulsion units span a virtual triangle enclosing the centre of gravity. Thereby, the configuration can be made further robust and full control about all degrees of freedoms is enabled.

Four propulsion units 4 and 5 may be located on the corners of a virtual rectangle enclosing the centre of gravity. It is to be noted that the propulsion units 4 and front propulsion units 5 are both examples of propulsion units referred to in the claims.

If a limit value of the thrust force was caused to be exceeded, in the example given in Figs. 3A and 3B, the force command regarding the z axis is adjusted in hover flight, while in Figs. 5A and 5B, the force command regarding the x axis is adjusted in cruise flight. In Figs. 4A and 4B, the force command regarding the x axis is adjusted in hover flight, if the angular position would be caused to exceed its limit value. Thus, an adjustment in the force command, in particular, the adjusted degree of freedom depends on the current flight state with respect to the propulsion unit determined to be saturated (that is, depends at least on the current angular position and/or the current thrust force of the propulsion unit which is determined to be saturated) and the control input, that is, angular position and/or thrust force caused to exceed its respective limit value. Thus, the aerial vehicle can be controlled appropriately in each flight state and fulfilling the moment commands can be ensured.

It should be noted that for the following explanation, wherein the adjustment in the force commands is explained in more detail, the hover flight can be considered as a first flight state according to the present disclosure. The cruise or forward flight can be considered as a second flight state. The third flight state can represent any intermediate flight state between the first and second flight states. A first degree of freedom of the translational movement related command is the x axis. A second degree of freedom corresponds to the z axis. The thrust force is the one control input while the angular position is the other control input.

For the adjustment of the force commands, correlation quantities can be determined, for example, by the controller. The correlation quantities are determined in the respective flight state. As correlation quantity, a sensitivity of a respective degree of freedom of the force commands with respect to any of the control inputs can be determined. However, also an inversion of the sensitivity being a relation of a control input with respect to a respective degree of freedom of the force commands can be used as a correlation quantity. The correlation quantities can be determined analytically or numerically. For example, a difference approximation can be applied wherein a current force command in the respective degree of freedom and an instructed force command as well as a current value of a control input and a value of the control input correlated with the instructed force command are used.

In hover flight comprising states being hover flight with moderate deviations from a hover flight trim condition, the sensitivity (fourth correlation quantity) of the force command along the z axis (the second degree of freedom) with respect to the angular position (the other of the angular position and the thrust force) is substantially close to or equal to zero. On the other hand, the sensitivity (third correlation quantity) of the force command along the x axis (first degree of freedom) with respect to the angular position is rather large, in hover flight. Thus, if the angular position is determined to be saturated, the first degree of freedom, that is, the force command along the x axis is adjusted. Thus, it can be ensured that the moment command, in particular, a yaw moment command can be met.

Also, in hover flight, the sensitivity (second correlation quantity) of the force command along the z axis with respect to the thrust force (the one of the angular position and the thrust force) is maximum while the sensitivity (first correlation quantity) of the force command along the x axis is considerably smaller, or at its minimum. Thus, if the thrust force is determined to be saturated, the force command along the z axis (second degree of freedom) is adjusted.

As described, adjustment is only made in the degree of freedom correlating with the correlation quantity having the higher absolute value in case the correlated control input is determined to be saturated. However, it is to be noted that, in other examples, an adjustment can also be made in the degree of freedom correlating with the correlation quantity having the smaller absolute value. The adjustment amount in this degree of freedom is however smaller as the one in the degree of freedom correlating with the correlation quantity having the higher absolute value.

In forward flight, which can be considered as second flight state, the foregoing applies in a reverse manner.

Further, above the relations in one flight state have been described. However, it is worth mentioning, that it is preferable that the first flight state can be put in relation to the second flight state. That is, if the angular position is determined to be saturated, the adjustment amount in a degree of freedom in the flight state having the higher absolute value in the correlated correlation quantity is higher than in the flight state having the smaller absolute value in the correlation quantity. For example, the above mentioned first correlation quantity has an absolute value smaller in the hover flight than in the cruise flight. Consequently, according to the control method, the adjustment amount in the x axis (first degree of freedom) is set smaller in hover flight than in cruise flight, if the thrust force is determined to be saturated. On the other hand, the second correlation quantity has an absolute value higher in the hover flight than in the cruise flight. Consequently, according to the control method, the adjustment amount in the z axis (second degree of freedom) is set higher in hover flight than in cruise flight, if the thrust force is determined to be saturated.

For the correlation quantities regarding the angular position, the opposite applies. The third correlation quantity has an absolute value higher in hover flight than in cruise flight. Consequently, according to the control method, the adjustment amount in the x axis (first degree of freedom) is set higher in hover flight than in cruise flight, if the angular position is determined to be saturated. The fourth correlation quantity has an absolute value smaller in hover flight than in cruise flight. Consequently, according to the control method, the adjustment amount in the z axis (second degree of freedom) is set smaller in hover flight than in cruise flight, if the angular position is determined to be saturated.

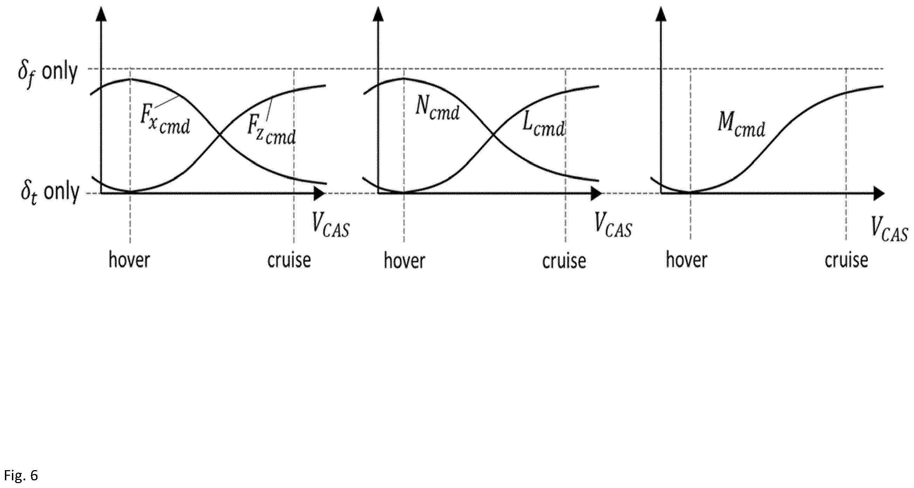

The above behaviour is better conceivable in view of Fig. 6

Fig. 6 shows the correlation between the force and moment commands and the control inputs around a trim condition depending on the flight state.

In the graphics of Fig. 6, the abscissa represents the speed of the aerial vehicle along the x axis, in particular, if the x axis is orientated parallel to the earth surface. Thus, in hover flight the speed V_{CAS} is small or may be even zero, while in cruise flight the speed is much higher. The ordinate represents the control input influenced. δf labels the angular position, while δt labels the thrust force.

As can be seen therein, in hover flight, a first command group of a force command along the vertical axis F_{z} and a roll moment command L and a pitch moment command M only affect the thrust force. That is, a sensitivity of the force command along the z axis with respect to the thrust force is relatively high. Contrary thereto, a second command group of a force command along the longitudinal axis Fₓand a yaw moment command N predominantly affects the angular position in hover flight. That is, a sensitivity of the force command along the x axis with respect to the angular position is relatively high. In cruise flight, the relationships are approximately reversed.

It is to be noted that an exclusive influence on δf is not achievable since any command of the first and second group also requires an adaption in the thrust force to comply with the respective command values.

As can be taken from Fig. 6, in intermediate states (third state) between hover and cruise flight, both control inputs can be significantly influenced by all of the command values of the first and second group. Consequently, adjustment can be made in both degrees of freedom of the translational movement related command, for either of the control input being determined to be saturated.

Thus, an adjustment in the translational movement related commands can be made depending on a current hover-cruise ratio, which determines the ratio of the thrust force component of the saturated propulsion unit, or of all propulsion units, along the z axis to the thrust force component along the x axis. In particular, the closer a hover-cruise ratio is to the hover flight, the higher the adjustment amount regarding the z axis is, if the thrust force is saturated, and the higher the adjustment amount regarding the x axis is, if the angular position is saturated. The closer the hover-cruise ratio is to the cruise flight, the higher the adjustment amount regarding the x axis is, if the thrust force is saturated, and the higher the adjustment amount regarding the z axis is, if the angular position is saturated. The hover-cruise ratio is inherently affected by the current translational movement related command along the longitudinal axis of the aerial vehicle and the current translational movement related command along the vertical axis. The current commands are the commands leading to the current flight state in which saturation is determined based on instructed commands which are instructed in the current flight state, for example, to cause a change of the flight state. It is to be noted that saturation is always determined based on the instructed commands and the adjustment is always made in the instructed commands.

Additionally or alternatively, an adjustment in the translational movement related commands can be directly made dependent on the instructed translational movement related command along the longitudinal axis of the aerial vehicle and the instructed translational movement related command along the vertical axis. For example, a ratio of the instructed translational movement related commands can be directly used to determine proper adjustment.

It is also possible that an adjustment in the translational movement related commands is made dependent on the pilot inputs. Thereby, it can be directly referred to the pilot inputs which may indicate a preference regarding which degree of freedom of translational movement related commands is more important. For example, a pilot input may be converted into a threshold value for at least one of the translational movement related commands.

In general, the adjustment may be made depending on the ratio of the translational movement related command (force command) along the z axis to the translational movement related command along the x axis. In particular, the higher one of these commands may undergo stronger adjustment. This may apply considering the current commands (for example, in form of the hover-cruise ratio) and/or the instructed commands (that is, change with respect to the current flight state).

Alternatively or additionally, adjustment can be made in accordance with the above correlation quantities to be determined in the third flight state. The higher an absolute value of a correlation quantity is, adjustment is predominantly made in the correlated degree of freedom, if it is determined that the correlated control input is saturated.

It is to be noted that, generally, over at least two different flight states, the higher an absolute value of a correlation quantity of the translational movement related command in a respective degree of freedom and one of the angular position and the thrust force is, the higher the adjustment amount of the translational movement related command in the respective degree of freedom is, if it is determined that the one of the angular position and the thrust force is saturated. This may apply for a plurality of intermediate (third) flight states, and may apply for the first and second flight states mentioned above when compared to each other. For example, considering Fig. 6, the first correlation quantity is small in hover flight, and is high in forward flight, while it increases gradually from the hover flight to the forward flight. Thus, there may be a constant increase in the adjustment amount in the force command in the first degree of freedom in a range from the first to the second state comprising states being hover/forward flight, if it is determined that the thrust force is saturated. In the same way, there may be a constant decrease in the force command in the second degree of freedom from the first to the second flight state, if it is determined that the thrust force is saturated. If the angular position is determined to be saturated, the relations are reversed, that is, decrease in the force command in the first degree and increase in the force command in the second degree from the first to the second flight state. Consequently, if saturation of a correlated control input is determined, the relatively higher an absolute value of a correlation quantity in the first degree of freedom is with respect to the absolute value of a correlation quantity in the second degree of freedom, the relatively higher the adjustment amount of the translational movement related command in the first degree of freedom is with respect to the adjustment amount in the second degree of freedom.

In addition, it is possible to perform adjustment in the third flight state based on at least one predetermined threshold value of the translational movement related command in at least one degree of freedom. The threshold value may vary and depend on the flight state. For example, in heights close to the ground a minimum force command in the z direction may be the threshold value. An adjustment amount is then set such that the threshold value is complied with. Further adjustment is made in another degree of freedom having no threshold value assigned.

It is to be noted that a control based on at least one predetermined threshold value for any degree of freedom of the translational movement commands as well as a control based on the ratio of the translational movement related command along the longitudinal axis of the aerial vehicle to the translational movement related command along the vertical axis of the aerial vehicle is not limited to the intermediate (third) flight states, but can also be applied in other situations. For example, in addition to considering the correlation quantities in the first and second flight state, also a predetermined threshold value and/or said ratio can be taken into account. A predetermined threshold value for at least one translational movement related command can be used as long as the other translational movement related command has sufficient association with the control input being saturated. Otherwise, saturation cannot be prevented. Consequently, control can be made even more appropriately.

It is to be noted that, if threshold values are applied to both of the translational movement related commands, it needs to be guaranteed by design that they are defined such that the rotational movement related commands can be met under all possible/applicable flight conditions.

As described above, in hover flight, the limit value(s) of the angular position are associated with a force command regarding the x axis and a yaw moment command, and the force command regarding the x axis is adjusted upon theoretical excess. Further, in hover flight, the limit value(s) of the thrust force are associated with a force command regarding the z axis, a roll moment and a pitch moment, and the force command regarding the z axis is adjusted upon theoretical excess. In cruise flight, the associations are switched. Thus, the aerial vehicle 1 having the pivotable propulsion units 4 and front propulsion units 5 can be appropriately controlled.

The case shown in Figs. 3A and 3B may occur if at least one of the propulsion units 4 and the front propulsion units 5 fails during hover flight, and thus the principle of adjustment shown therein can be applied in case of such failure. Thus, the controller may determine upon solving the equations that a thrust force of a propulsion unit 4 or front propulsion unit 5 needs to be increased in order to provide the predetermined force command regarding the z axis and the pitch and roll moment commands. In particular, the upper limit value of the thrust force may be saturated. Then, the controller may adapt the force command along the z axis by adding a component pointing downward. Thus, even in case of at least one propulsion unit failing during hover flight, the attitude of the aerial vehicle 1 can be appropriately set.

The case of Figs. 4A and 4B may occur if the heading (attitude about the z axis) of the aerial vehicle is requested to change during backward hover flight, in particular, in case of strong tail wind, for example, equal to or more than 30 km/h, and thus the principle of adjustment shown therein can be applied in case of such requested change of the heading. This causes the controller to change the yaw moment command. By adjusting the force command regarding the x axis, the desired heading of the aerial vehicle 1 can be ensured, while a deviation along the x axis may be accepted.

The case of Figs. 5A and 5B may occur in case of lateral gusts occurring in cruise flight, and thus the principle of adjustment shown therein can be applied in case of such lateral gusts. For example, gusts of equal to or more than 50 km/h may occur. To compensate for these gusts, a yaw moment command may be changed and provoke a yaw moment command causing saturation. In order to ensure that this yaw moment command can be tracked in consideration of thrust force limitations, the translational movement related command in the longitudinal axis may be adjusted.

It is to be noted that an adjustment amount, in particular, a value and/or a direction (positive or negative) thereof, may depend on the upper or the lower limit value being saturated. Thus, the adjustment can be more appropriate. Further, if the upper or the lower limit value is saturated may depend on the current flight state. In the example, of cruise flight and additional gusts, a slow flight may cause the lower limit value of the thrust force to be saturated while a fast flight may cause the upper limit value to be saturated.

It is to be noted that above a case has been described in which the aerial vehicle is controlled only by manipulating the control inputs of the propulsion units 4 and front propulsion units 5. Manipulation means controlling the control inputs of the propulsion units 4 and front propulsion units 5 without feeding back the values of the control inputs. However, the aerial vehicle may also have at least one adjustable flight control surface regarding at least one degree of freedom of the attitude of the aerial vehicle.

The above moment and force commands can be determined based on automatic control by the controller or another control unit or by inputs of the pilot.

Further, it has to be noted that in the above, the control inputs may be determined in anticipation of thrust, gravity, and aerodynamics. For example, in the table which assigns the force and moment commands to values of the control inputs there may be stored different values depending on thrust, aerodynamic and gravity forces and/or moments.

It is to be noted that while in the foregoing description force and moment commands have been used, the translational movement and rotational movement related commands can also be velocity, acceleration or position/rotation commands regarding the respective axes, for example.

In the above, hover and cruise flight have been described as examples for the first and second flight state. However, other flight states such as substantially vertical ascent or descent can be considered as first and/or second flight state. The hover-cruise ratio can be referred to more generally as a first to second flight state ratio, considering the definitions of the flight states above.

Further, any upper or lower limit value may vary dependent on the flight state. In particular, a result of a detection device can be used and an appropriate limit value is determined by the controller. In particular, flow transitions can be determined based on flight conditions including aerodynamic parameters, and at least one limit value can be set in view of the flow transition. It is preferable if a limit value is applicable only to a selection of flight states but not necessarily to all flight states.

In the present disclosure, terms such as "first", "second", "one", "other" are used only for distinction. They only confer limitation to such extent that they are used in relation to each other. Thus, for example, the third and fourth correlation quantities can also be considered as first and second correlation quantities, if the angular position is considered as the one of the angular position and the thrust force, and the first and second correlation quantity can be considered as the third and fourth correlation quantities if the thrust force is considered as the other of the angular position and the thrust force.

## Claims

1. A method of operating an aerial vehicle (1),
the aerial vehicle (1) comprising a plurality of propulsion units (4, 5) arranged to be pivotable about at least one axis along an angular position and configured to generate a thrust force and/or a lift force,
wherein
the angular position and/or the thrust force of the plurality of propulsion units (4, 5) are controlled based on a translational movement related command, in particular, a force command, of the aerial vehicle (1) regarding at least one degree of freedom and a rotational movement related command, in particular, a moment command of the aerial vehicle (1) regarding at least one degree of freedom,
**characterized in that**
if it is determined that a combination of the translational movement related command and the rotational movement related command causes a saturation in the angular position and/or the thrust force of at least one of the plurality of propulsion units (4, 5), the translational movement related command is adjusted in at least one degree of freedom such that the rotational movement related command is met.

2. The method according to claim 1,
wherein in controlling the rotational movement of the aerial vehicle (1) no other control effectors beyond the plurality of propulsion units (4, 5), in particular, no other primary flight control surfaces participate.

3. The method according to claim 1 or 2,
wherein at least one, preferably, all of the plurality of propulsion units (4, 5) is/are pivotable about a transversal axis of the aerial vehicle (1) extending along a wing span of the aerial vehicle.

4. The method according to any of the preceding claims,
wherein at least one propulsion unit (4, 5) is provided on each side of a longitudinal axis of the aerial vehicle (1), even more preferably at least two propulsion units are aligned along a transversal axis of the aerial vehicle (1) and/or at least three propulsion units (4, 5) are arranged on the corners of a virtual triangle, respectively, preferably at least four propulsion units (4, 5) are arranged on the corners of a virtual quadrangle, in particular, a rectangle.

5. The method according to any of the preceding claims,
wherein an adjustment in a degree of freedom of the translational movement related command depends on the flight state, and/or
depends on the angular position and/or the thrust force being caused to be saturated, and/or
depends on a correlation quantity between the translational movement related command along the longitudinal and/or vertical axis of the aerial vehicle and the angular position, and/or
depends on a correlation quantity between the translational movement related command along the longitudinal and/or vertical axis of the aerial vehicle and the thrust force, and/or
depends on a ratio of the translational movement related command along a longitudinal axis of the aerial vehicle to the translational movement related command along a vertical axis of the aerial vehicle, wherein said ratio is preferably variable, more preferably said ratio varies with a pilot input, and/or
depends on at least one predetermined threshold value of the translational movement related command along the longitudinal and/or vertical axis of the aerial vehicle, wherein said threshold value is preferably variable, more preferably said threshold value varies with a pilot input.

6. The method according to claim 5,
wherein, the higher an absolute value of a correlation quantity between the translational movement related command along the longitudinal axis and/or the vertical axis of the aerial vehicle and the angular position is, the higher the adjustment amount of the translational movement related command along the longitudinal axis and/or the vertical axis of the aerial vehicle is, respectively, if it is determined that the angular position is saturated, and/or
wherein, the higher an absolute value of a correlation quantity between the translational movement related command along the longitudinal axis and/or the vertical axis of the aerial vehicle and the thrust force is, the higher the adjustment amount of the translational movement related command along the longitudinal axis and/or the vertical axis of the aerial vehicle is, respectively, if it is determined that the thrust force is saturated,
particularly,
a first correlation quantity is a correlation quantity between the translational movement related command along the longitudinal axis of the aerial vehicle and one of the angular position and the thrust force, and
a second correlation quantity is a correlation quantity between the translational movement related command along the vertical axis of the aerial vehicle and the one of the angular position and the thrust force,
in a first flight state, in particular hover flight, in which an absolute value of the first correlation quantity is smaller than in a second flight state, in particular forward flight, an adjustment amount of the translational movement related command along the longitudinal axis of the aerial vehicle is smaller than in the second flight state, if it is determined that the one of the angular position and the thrust force is saturated and
preferably, in the first flight state, an absolute value of the second correlation quantity is higher than in the second flight state, an adjustment amount of the translational movement related command along the vertical axis of the aerial vehicle is higher than in the second flight state, if it is determined that the one of the angular position and the thrust force is saturated.

7. The method according to claim 5 or 6,
wherein a first correlation quantity is a correlation quantity between the translational movement related command along the longitudinal axis of the aerial vehicle and one of the angular position and the thrust force, and
a second correlation quantity is a correlation quantity of the translational movement related command along the vertical axis of the aerial vehicle and the one of the angular position and the thrust force,
in a first flight state, in particular hover flight, an absolute value of the first correlation quantity is smaller than an absolute value of the second correlation quantity, and an adjustment amount of the translational movement related command along the vertical axis of the aerial vehicle is higher than along the longitudinal axis of the aerial vehicle, preferably only the translational movement related command along the vertical axis is adjusted, if it is determined that the one of the angular position and the thrust force is saturated.

8. The method according to claim 7,
wherein in a second flight state, in particular forward flight, an absolute value of the second correlation quantity is smaller than an absolute value of the first correlation quantity, and
an adjustment amount of the translational movement related command along the longitudinal axis of the aerial vehicle is higher than an adjustment amount along the vertical axis of the aerial vehicle, preferably only the translational movement related command along the longitudinal axis is adjusted, if it is determined that the one of the angular position and the thrust force is saturated.

9. The method according to claim 6 or claims 7 and 8,
wherein in a third flight state between the first and second flight states an adjustment in the translational movement related commands along the longitudinal axis and the vertical axis of the aerial vehicle is made
based on a ratio of the first correlation quantity and the second correlation quantity, and/or
a ratio of the translational movement related command along the longitudinal axis of the aerial vehicle to the translational movement related command along the vertical axis of the aerial vehicle, wherein said ratio is preferably variable, more preferably said ratio varies with a pilot input, and/or
based on at least one predetermined threshold value of the translational movement related command along the longitudinal and/or vertical axis of the aerial vehicle wherein said threshold value is preferably variable, more preferably said threshold value varies with a pilot input.

10. The method according to any of the preceding claims, wherein in at least one predetermined flight state, in particular, in the first flight state, a translational movement related command along the vertical axis and/or a rotational movement related command about the longitudinal axis and/or the transversal axis causes saturation in the thrust force of at least one propulsion unit (4, 5), and the translational movement related command along the vertical axis is adjusted.

11. The method according to any of the preceding claims, wherein in at least one predetermined flight state, in particular, in the first flight state, a translational movement related command along the longitudinal axis and/or a rotational movement related command about the vertical axis causes saturation in the angular position of at least one propulsion unit (4, 5), and the translational movement related command along the longitudinal axis is adjusted.

12. The method according to any of the preceding claims, wherein in at least one predetermined flight state, in particular, in the second flight state, a translational movement related command along the vertical axis and/or a rotational movement related command about the longitudinal axis and/or the transversal axis causes saturation in the angular position of at least one propulsion unit (4, 5), and the translational movement related command along the vertical axis is adjusted.

13. The method according to any of the preceding claims, wherein in at least one predetermined flight state, in particular, in the second flight state, a translational movement related command along the longitudinal axis and/or a rotational movement related command about the vertical axis causes saturation in the thrust force of at least one propulsion unit (4, 5), and the translational movement related command along the longitudinal axis is adjusted.

14. The method according to any of the preceding claims, wherein in at least one predetermined flight state, in particular, in the third flight state, a translational movement related command along the longitudinal axis and/or vertical axis and/or a rotational movement related command about the longitudinal axis and/or the transversal axis and/or the vertical axis causes saturation in the thrust force and/or angular position of at least one propulsion unit (4, 5), and the translational movement related command along the longitudinal axis and/or the vertical axis is adjusted.

15. The method according to any of the preceding claims, wherein saturation of the angular position and/or the thrust force is determined with respect to a respective limit value, and
the respective limit value is variable,
preferably, the respective limit value depends on at least one parameter of the aerial vehicle and the environmental conditions, even more preferably, on a parameter related to at least one of aerodynamic, thermic, and mechanic characteristics.

16. A controller configured to perform a control according to any of the preceding claims, when provided to an aerial vehicle (1).
